# EUROPEAN PATENT APPLICATION

(11) **EP 3 101 323 A1**
(43) Date of publication of application: **07.12.2016**
(21) Application number: 16172348.1
(22) Date of filing: 01.06.2016
(51) Int. Cl.: F16L 3/26, H02G 3/32, H02G 3/04, E04F 17/08

(54) **APARTMENT ELEMENT FOR COVERING AT LEAST ONE PIPE AND/OR CABLE**

(30) Priority: 02.06.2015 FI 20155417
(71) Applicant: Pipe-Modul Oy, 50150 Mikkeli (FI)
(72) Inventor: LIEVONEN, Juha, FI-50600 MIKKELI (FI)
(74) Representative: Berggren Oy Ab

(57) **Abstract**

According to one embodiment, the application relates to an apartment element (100) for protecting at least one pipe and/or cable. The element comprises a base member (110) for attaching the element to a mounting surface, said base member comprising a flat section (112), side sections (114b) and supporting means (192) for securing at least one pipe and/or cable. In addition, the element comprises a cover member (130) for protecting at least one pipe and/or cable, said cover member comprising a flat section (132) and at least one side section (134a), and said cover member being adapted for attachment to the base member. When in attachment with each other, the base member and the cover member make up an installation space (160) for at least one pipe and/or cable. The cover member is constructed from a building board.

## Description

### Technical field

The application relates generally to an apartment element for protecting at least one pipe and/or cable.

### Background

Hot and cold water pipes and electrical cables to be installed in the interior spaces of buildings and apartments have been traditionally concealed from view by encapsulating the same e.g. with a wooden frame and wood fiber or gypsum boards.

The merit of traditional encapsulation has been improved aesthetics, easier cleaning and less demand for cleaning with no need of removing dust and dirt from between pipes and walls.

What has been developed in view of facilitating the encapsulation of pipes is an element solution, wherein to the walls and ceilings is first mounted a base of a sheet metal pipe element, followed by securing the pipes thereto. Finally, the element has been closed with a sheet metal cover.

The benefit of element encapsulation has been the ease and speed of its installation with respect to traditional practice.

The problem with a pipe element of sheet metal has nevertheless been its poor compliance with the decor of buildings and apartments.

### Summary

One objective of the invention is to eliminate problems of the prior art and to provide an apartment element, which is quickly and readily installable, complies aesthetically with installation facilities, and whose base member can have larger tolerances as it will be concealed by a cover member after attachment.

The one objective of the invention is attained with an apartment element of claim 1.

The apartment element according to one embodiment for protecting at least one pipe and/or cable comprises a base member for attaching the element to a mounting surface, said base member comprising a flat section, side sections and supporting means for securing at least one pipe and/or cable. The element further comprises a cover member for protecting at least one pipe and/or cable, said cover member comprising a flat section and at least one side section, and said cover member being adapted for attachment to the base member. When in attachment with each other, the base member and the cover member make up an installation space for at least one pipe and/or cable. The cover member is constructed from a building board.

The apartment element refers e.g. to elements intended for the interior spaces of buildings or dwellings and the purpose of which is to protect water pipes, heating pipes, as well as electrical and communication cables to be fitted therein.

Other embodiments are presented in the dependent claims.

### Brief description of the figures

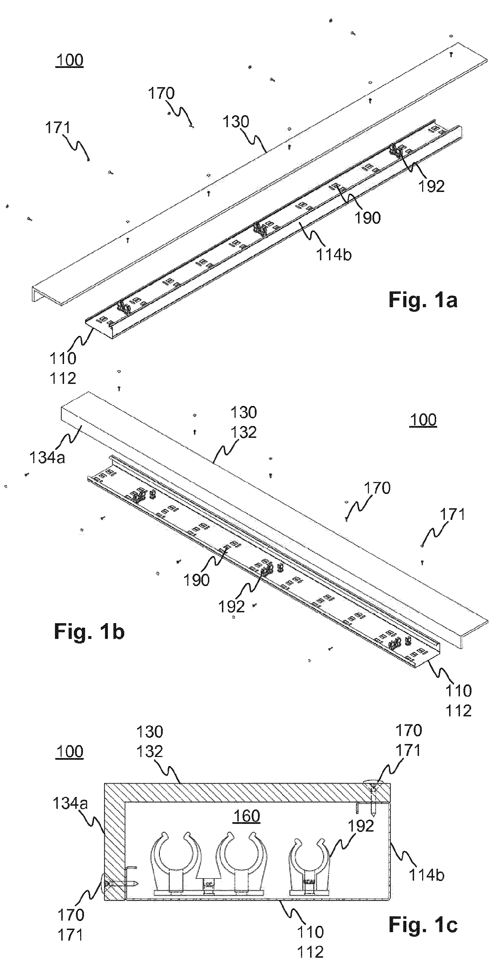

It is in the detailed description of the figures that embodiments of the invention will be recounted more precisely with reference to the accompanying figures, in which
- figs. 1a-1b: show an opened angle element from various perspectives,
- figs. 1c-1d: show a closed and opened angle element in cross-sections, and

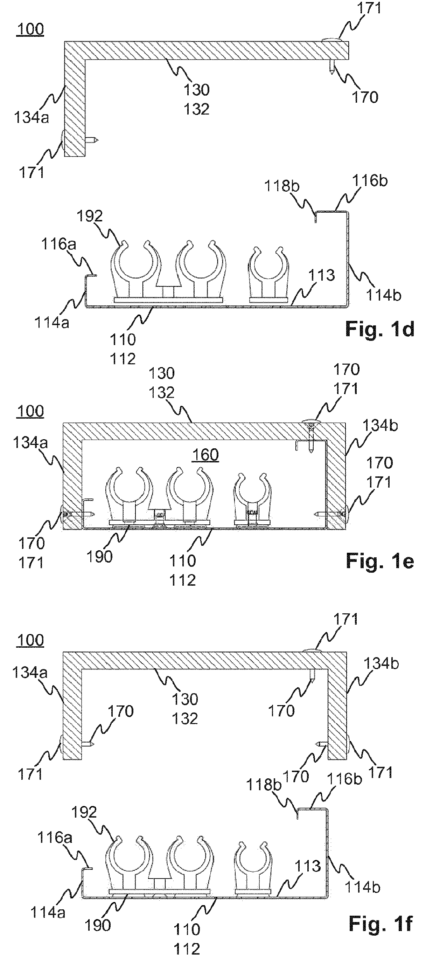

- figs. 1e-1f: show a closed and opened basic element in cross-sections.

### Detailed description of the figures

Figs. 1a-1f show an apartment element (pipe element) for protecting at least one pipe, e.g. a hot and/or cold water pipe or a heating pipe, and/or cable, e.g. en electrical and/or communication cable, said element comprising a base member 110 and a cover member 130 adapted for attachment to the base member 110.

Figs. 1 a-1 b show an angle element 100 with the cover member 130 lifted apart from the base member 110.

The base member 110 can be first installed on a mounting surface, e.g. on a wall, a ceiling, a wall corner, or a ceiling/wall corner in the interior spaces of an apartment, by means of fasteners 170, e.g. wood or sheet metal screws, and/or a separate fastening member.

Pipes and cables can be secured to supporting means 190, 192 present in the base member 110, e.g. to supports 190, e.g. by means of plastic or metal cable ties, and/or to pipe clamps 192.

The installation is complete as the cover member 130 is attached to the base member 110.

The pipe clamps 192, which can be fixed e.g. to the supports 190 or directly to the base member 110, can be pre-mounted on the elements 100 even at the factory prior to the installation on a mounting surface or not until in the course of installation at the site.

The fasteners 170 can be concealed with cover caps 171 for visual appearance.

The element 100 can have dimensions e.g. as follows: width 110, 160, 170, 190, 350 or 500 mm depending on the number of pipes, wires and cables, height 60, 70, 80, 100, 120 or 150 mm, and length 2000, 2500 or 3000 mm.

Alternatively, the element 100 can be manufactured to other width, height and length dimensions and, if necessary, these may vary according to intended use.

Protection for pipes and cables can be provided in a modular manner as regards the elements 100 which are joined together. In all parts, the element 100 is nevertheless the same its basic design, just the dimensions and shapes may vary. The various shapes may include e.g. angle and branch pieces.

By virtue of a modular design and surface mounting of the element 100, the new pipe installations and renovations, as well as electrical and communication installations, can be carried out conveniently, expediently and economically.

Further by virtue of the element 100, it will be possible, as a rule, to conduct pipe renovations without dismantling the existing structures, whereby the speed makes it possible to reside in a currently renovated building as disruptions in water supply will be brief during connection.

In addition, the openability of the element 100 enables, in accordance with life cycle thinking, easy repair and maintenance procedures for pipes and cables as well as, when the useful service life of pipes comes to an end, an easy replacement thereof.

Moreover, the openability of the element 100 enables an easy addition of electrical and communication cables at any time, e.g. when the housing company finds it necessary to extend fiber optic cables to apartments.

Figs. 1 c-1 d show the structure of an angle element 100 more precisely.

The base member 110 comprises a flat section 112 and side sections 114a, 114b, and it is substantially U-shaped.

The flat section 112 can have its internal surface 113 provided with supports 190 and/or pipe clamps 192 for securing two water pipes and a heating pipe and possibly cables. As opposed to the figures, the supporting means 190, 192 may enable the attachment of e.g. a single water and/or heating pipe.

The side sections 114a, 114b can be bent to be substantially perpendicular with respect to the flat section 112, such that the first side section 114a can have a lesser height than the second side section 114b.

In addition, the side sections 114a, 114b can have end portions 116a, 116b thereof bent to be substantially perpendicular with respect to the side sections 114a, 114b and inward towards an installation space 160 so as to be substantially co-directional with the flat section 112.

The side section 114a and the end portion 116b can have preformed holes for fasteners 170.

Furthermore, the end portion 116b can have its distal part 118b bent to be substantially perpendicular with respect to the end portion 116b and towards the flat section 112 so as to make it substantially co-directional with the side section 114b.

The parts 116a, 116, 118b have a function of structurally reinforcing the base member 110.

The base member 110 can be constructed from ordinary or zinc coated steel sheet whose thickness can be e.g. 0,5-1,5 mm.

It may be possible to attach the element to a mounting surface with fasteners 170 through the flat section 112 and/or the side section 114b.

The cover member 130 comprises a flat section 132 and a first side section 134a, and it is substantially L-shaped.

The cover member 130 is constructed from at least one building board, e.g. an MDF board (medium-density fiberboard), a gypsum board, a magnesite board, or the like building board.

The cover member 130 can be coated e.g. with a wallpaper, paint, or some other coating.

By virtue of the cover member 130, the element 100 improves in terms of aesthetic appearance and the installation work becomes faster as the amount of finishing work declines.

Also, by virtue of the cover member 130, the element 100 need not be worked on at the installation site, whereby the installation work produces less dirt or noise.

The side section 134a and the flat section 132 may have preformed holes for fasteners 170.

It may be possible to attach the cover member 130 with fasteners 170 through the side section 134a to the side section 114a of the base member 110 and through the flat section 132 to the end portion 116b of the base member 110.

When in attachment with each other, the base member 110 and the cover member 130 make up an installation space 160 for at least one pipe and/or cable.

The element 100 of figs. 1 a-1 d can be used when the attachment of the cover member 130 is not possible from the direction of the base member's 110 side section 114b, e.g. when the element 100 is installed in a wall corner or at the ceiling boundary.

Figs. 1e-1f show the structure of a basic element 100 more precisely.

The base member 110 can have its parts 112, 114a, 114b, 116a, 116b, 118b, 190, 192 and materials like those in the element 100 of figs. 1a-1d.

In addition or as an alternative to holes in the end portion 116b, the side section 114b can have preformed holes for fasteners 170.

Alternatively, as opposed to figs. 1 e-1 f, the base member's 110 second side section 114b can have a height which is substantially equal to that of the first side section 114a, whereby the side section 114b can be just like the side section 114a, yet in a mirror image as the end portion 116b can be bent to be substantially perpendicular with respect to the side section 114b and inwards toward the installation space 160 so as to make it substantially co-directional with the flat section 112.

In an optional base member 110, it is possible that only the side sections 114a, 114b have preformed holes for fasteners 170.

The cover member 130 comprises a flat section 132 and side sections 134a, 134b, and it is substantially U-shaped.

The cover member 130 can have materials like those in the element 100 of figs. 1a-1d.

The side section 134a and the flat section 132 can be provided with preformed holes for fasteners 170.

In addition or as an alternative to holes in the flat section 132, the side section 134b can have preformed holes for fasteners 170.

It may be possible to attach the cover member 130 with fasteners 170 through the side section 134a to the side section 114a of the base member 110 and through the flat section 132 to the end portion 116b of the base member 110 and/or through the side section 134b to the side section 114b of the base member 110.

Alternatively, if the base member 110, as opposed to figs. 1 e-1 f, has side sections 114a, 114b substantially equal in height, it may be possible to attach the cover member 130 with fasteners 170 through the side sections 134a, 134b to the side sections 114a, 114b.

When in attachment with each other, the base member 110 and the cover member 130 make up an installation space 160 for at least one pipe and/or cable.

It may be possible to attach the element 100 of figs. 1e-1f to a mounting surface with fasteners 170 through the flat section 112.

The element 100 of figs. 1e-1f can be used when the attachment of the cover member 130 is possible from the direction of both side sections 134a, 134b.

The element 100 of figs. 1e-1f can have dimensions like those in the element 100 of figs. 1a-1d.

Described above have been just a few embodiments of the invention. The principle according to the invention can naturally be modified within the scope of protection defined in the claims, regarding e.g. implementation details as well as fields of use.

## Claims

1. An apartment element (100) for protecting at least one pipe and/or cable, said element comprising
a base member (110) for attaching the element to a mounting surface, said base member comprising a flat section (112), side sections (114a, 114b) and supporting means (190, 192) for securing at least one pipe and/or cable,
a cover member (130) for protecting at least one pipe and/or cable, said cover member comprising a flat section (132) and at least one side section (134a, 134b), and said cover member being adapted for attachment to the base member,
said base member and cover member, when in attachment with each other, making up an installation space (160) for at least one pipe and/or cable,
**characterized in that**
the cover member is constructed from a building board, and
the cover member is further adapted to be attached with fasteners through the cover member's flat section to an end portion of the base member's second side section.

2. An element according to claim 1, wherein the building board is an MDF board, a gypsum board or a magnesite board.

3. An element according to either of the preceding claims, wherein end portions (116a, 116b) of the base member's side sections are bent to be substantially perpendicular with respect to the side sections and towards the installation space so as to be substantially co-directional with the flat section.

4. An element according to any of the preceding claims, wherein the cover member is adapted to be attached with fasteners (170) through the cover member's first side section (134a) to the base member's first side section (114a).

5. An element according to any of the preceding claims, wherein the end portion (116b) of the second side section (114b) has its distal part (118b) bent to be substantially perpendicular with respect to the end portion and towards the flat section so as to be substantially co-directional with the side sections.

6. An element according to any of claims 1-4, wherein the cover member comprises side sections (134a, 134b) and the cover member is further adapted to be attached with fasteners through the cover member's second side section (134b) to the base member's second side section.

7. An element according to any of the preceding claims, wherein the base member is constructed from steel plate or zinc-coated steel plate.

8. An element according to any of the preceding claims, wherein the supporting means comprise at least one support (190) provided on the base member, enabling the attachment of at least one pipe and/or cable thereto, or at least one pipe clamp (192), enabling the attachment of at least one pipe thereto, or at least one pipe clamp fastened to the base member.

9. An element according to any of the preceding claims, which is adapted to be secured to a mounting surface with fasteners through the base member's flat section and/or second side section.
